# EUROPEAN PATENT APPLICATION

(11) **EP 2 003 909 A2**
(43) Date of publication of application: **17.12.2008**
(21) Application number: 08715143.7
(22) Date of filing: 04.03.2008
(51) Int. Cl.: H04Q 7/28

(54) **A COMMUNICATION METHOD, DEVICE AND SYSTEM FOR REALIZING SCHEDULING COMMUNICATION SERVICE**

(30) Priority: 10.04.2007 CN 200710091146
(71) Applicant: Huawei Technologies Co., Ltd., Longgang District, Shenzhen Guangdong 518129 (CN)
(72) Inventor: CHEN, Keping, Shenzhen, Guangdong 518129 (CN); MA, Zhangping, Shenzhen, Guangdong 518129 (CN); LI, Jiu, Shenzhen, Guangdong 518129 (CN); CHEN, Gaoqi, Shenzhen, Guangdong 518129 (CN)
(74) Representative: Karlsson, Leif Karl Gunnar
(86) International application number: PCT/CN2008/070407
(87) International publication number: WO 2008/122219

(57) **Abstract**

A communication method, device and system for implementing a scheduling communication service are provided. The communication system includes: a switch, a scheduling application server, and a scheduling terminal, the switch transfers a request message or a response message with a scheduling terminal as a caller or a callee to the scheduling application server, the scheduling application server stores session parameters of the scheduling terminal, determines the type of the call request message, converts the request message into one or more common call requests or response messages that can be identified by the switch, and sends the converted messages to the switch.

## Description

This application claims priority to Chinese patent application No.200710091146.1, filed with the Chinese patent office on April 10, 2007, and titled "COMMUNICATION METHOD, DEVICE AND SYSTEM", contents of which are incorporated herein by reference in its entirety.

### Field of the Invention

The present invention relates to the technical field of communication, and particularly to a communication method, device and system for implementing scheduling communication service.

### Background of the Invention

The scheduling communication as an important communication method has been widely used for central command in railway, electrical power, police, military and civil aviation systems and for production scheduling of large-scale and medium-scale mine enterprises. The scheduling communication therefore plays an important role. Besides common phone call functions, a scheduling communication system has some special functions, for example, in the scheduling communication system, a high-level subscriber can break in an ongoing call of a low-level subscriber, so as to implement a three-party telephone conference. This function is called "break-in". The scheduling switch in the scheduling communication system also has such scheduling functions as connection, preemption, multicall, and fun-call, which can be adapted to transmit scheduling commands to relevant persons promptly.

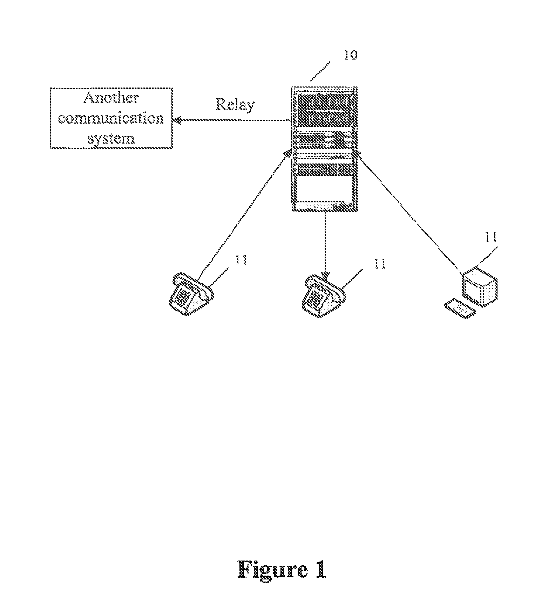

Most of existing scheduling communication systems are based on a dedicated scheduling switch. A system as illustrated in Figure 1 includes a scheduling switch 10 and scheduling terminals 11.

The scheduling switch as illustrated in Figure 1 is a dedicated switch, which has high real time and high-reliability features. Compared with a common switch, the scheduling switch not only enhances the call functions e.g. break-in, preemption, multicall, and broadcast, but also sets priorities of subscribers in the scheduling switch so that subscribers with different priorities have different operation authorities, e.g. a high-priority subscriber is allowed to break in a call of a low-priority subscriber, so as to facilitate emergency processing.

The scheduling terminal as illustrated in Figure 1 may be a specific terminal or a common telephone set. The specific terminal is usually provided with some shortcut keys such as "push to talk" and "one key multi number", through which shortcut keys automatic calls can be implemented, so as to facilitate prompt scheduling operations or sending of some special scheduling commands.

The scheduling communication system as illustrated in Figure 1 is a relatively independent communication system. Any communication between the communication system and another system (e.g. business telephone) is implemented by means of a corresponding mode of relay. Also, the communication system is not adapted to accommodate any business terminal because each subscriber in the scheduling communication system is configured with a priority, and the operation authority of a business terminal is too high if its priority is configured too high, which can bring some misoperation or vicious operation of the business terminal; or, if the priority of a business terminal is configured too low, the low-priority business terminal may be controlled by a high-priority device during a common business telephone call.

In the process of implementing the present invention, the inventor found that the prior art has at least the following problems: the existing scheduling communication system should adopt a completely dedicated switch, therefore, if a scheduling communication system needs to be established, another relative independent scheduling communication system needs to be arranged for a subscriber even if the subscriber has a common communication system; in addition, the existing scheduling communication system should adopt a completely dedicated switch and a priority is set for each subscriber in the system, therefore, if business terminals are added in the existing scheduling communication system, common call service between the business terminals in the communication system is influenced by the scheduling service, i.e. it is difficult to accommodate business terminals and scheduling terminals concurrently; furthermore, the existing scheduling communication system should adopt a completely dedicated switch, this system and the common communication system are two relatively independent ones, therefore operators need to develop not only scheduling communication services but also common communication services.

### Summary of the Invention

An embodiment of the present invention provides a communication method, device and system for implementing a scheduling communication service in a communication system including a common switch.

A communication method for implementing a scheduling communication service according to an embodiment of the present invention includes:

Receiving by a switch a request message or a response message with a scheduling terminal as a caller or a callee;

If the sender of the request message or the response message is a scheduling application server, sending or returning the request message or the response message from the switch to the callee or the caller; and

If the sender of the request message or the response message is not a scheduling application server, forwarding by the switch the request message or the response message to the scheduling application server, and receiving a message that is obtained by converting the request message or the response message and can be identified by the switch.

Another embodiment of the present invention provides a switch, including:

A caller/callee determination module, configured to determine whether a service is one with a scheduling terminal as a caller or a callee in accordance with a message received;

A message source determination module, configured to determine the sender of the message is the scheduling application server if the caller/callee determination module determines that the service is one with a scheduling terminal as a caller or a callee; and

A message forwarding module, configured to forward the message to the scheduling application server if the message source determination module determines that the sender of the message is not the scheduling application server, otherwise sends the message to the callee device.

Another embodiment of the present invention provides a communication system including a switch, the system further includes a scheduling application server,

The switch is configured to forward a request message or a response message with a scheduling terminal as a caller or a callee;

The scheduling application server is configured to receive the message forwarded by the switch, to obtain call parameter information on the scheduling terminal, to convert the request message forwarded by the switch into a common call request or response message that can be identified by the switch in accordance with the call parameter information, and to forward the common call request or response message that can be identified by the switch to the switch.

A further embodiment of the present invention provides a scheduling application server, including:

a switch interface module, configured to implement a communication between the scheduling application server and the switch;

a scheduling subscriber call parameter maintenance module, configured to obtain a message sent by the switch from the switch interface module and to store the call parameter information on the scheduling terminal; and

a scheduling service logic module, configured to perform scheduling operations in accordance with the call parameter information on the scheduling terminal.

It can be seen from the embodiments of the present invention, a scheduling application server is arranged in a communication system. This enables a switch in the system to route call requests or response messages which are from or destined to scheduling terminals to the scheduling application server for processing, so that scheduling communication services can be implemented in the communication system with a common switch by adding the scheduling application server in case of an existing switch or a switch with a little configuration; further, a communication system can support scheduling terminals and business terminals concurrently, and common call service between any two of the business terminals is not influenced by the scheduling communication services.

### Brief Description of the Drawings

Figure 1 is a diagram of a scheduling communication system based on the prior art;

Figure 2 is a structural diagram of a scheduling application server according to an embodiment of the present invention;

Figure 3 is an architectural diagram of a communication system according to an embodiment of the present invention;

Figure 4 is a flowchart of a common communication method which involves a scheduling terminal according to an embodiment of the present invention;

Figure 5 is a flowchart of a scheduling communication method according to an embodiment of the present invention;

Figure 6 is a flowchart of a common call which involves a scheduling terminal according to an embodiment of the present invention;

Figure 7 is a flowchart of a break-in service according to an embodiment of the present invention; and

Figure 8 is a flowchart of a multicall service according to an embodiment of the present invention.

### Detailed Description of the Invention

In an embodiment of the present invention, a scheduling application server is arranged in a common communication system. This embodiment can enable a common switch to route call requests or response messages with a scheduling terminal as a caller or a callee to the scheduling application server, so that the scheduling application server can store call parameters of the scheduling terminals for the use of subsequent services such as break-in, preemption, multicall, and broadcast. In this case, it is implementing scheduling communication service by adding the scheduling application server in an existing switch or in an existing switch with a little configuration. The communication system can concurrently accommodate scheduling terminals and common call terminals (e.g. business terminals, which act as an example in the following embodiments) and can concurrently implement scheduling communication service and common call service in the case that the common call service between the common call terminals is not influenced by the scheduling communication service. The call parameters may be relevant parameters stored by the scheduling application server during the process of establishing a session by the scheduling terminal, or may be relevant parameters of the scheduling terminal pre-stored by the scheduling application server.

Based on the traditional switching technique and the Internet Protocol (IP) switching technique, there are two kinds of scheduling communication systems adopted at present. Embodiments of the present invention relate to only the IP switching technique. In embodiments of the communication system of the present invention, respective main entities communicate with each other via the IP protocol.

The embodiments of the present invention are described in detail as follows with reference to the attached drawings.

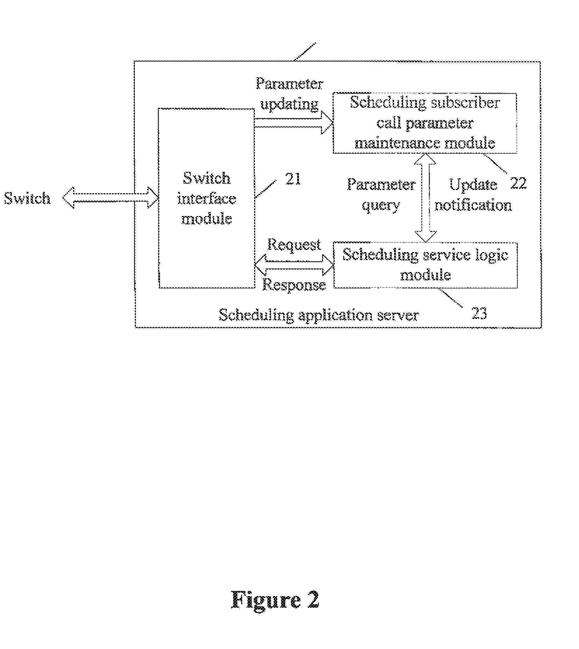

Figure 2 is a structural diagram of a scheduling application server according to an embodiment of the present invention. The scheduling application server 20 includes a switch interface module 21, a scheduling subscriber call parameter maintenance module 22, and a scheduling service logic module 23.

The switch interface module 21 is responsible for the communication with a switch, i.e. receives messages from the switch and forwards the messages received from the switch to the scheduling service logic module 23 for processing; and the switch interface module 21 also receives messages sent from the scheduling service logic module 23 and forwards the messages received from the scheduling service logic module 23 to the switch for processing.

The switch interface module 21 also forwards the messages received from the switch and the messages forwarded to the switch to the scheduling subscriber call parameter maintenance module 22, and updates call parameters in the scheduling subscriber call parameter maintenance module 22.

The scheduling subscriber call parameter maintenance module 22 is configured to obtain call requests or response messages from the switch interface module 21, to extract requisite call parameters (e.g. caller/callee number, call identifier, and code type) from the call requests or the response messages, and to update the extracted call parameters to its own database.

The scheduling subscriber call parameter maintenance module 22 may also receive a query command from the scheduling service logic module 23, and return a call parameter query result to the scheduling service logic module 23.

Alternatively, the scheduling subscriber call parameter maintenance module 22 sends a notification to the scheduling service logic module on its initiative if the call parameters change.

The scheduling service logic module 23 is configured to process various scheduling services and convert a scheduling signaling into one or more common call signaling. For example, a break-in call signaling may be converted into two session modification request messages and one common response message, and the scheduling service logic module 23 sends the converted common signaling to the switch via the switch interface module 21.

By adding the scheduling application server 20 in the existing common communication system, it is possible for the switch to route the call requests and the response messages with a scheduling terminal as a caller or a callee to the scheduling application server 20, so that the scheduling communication services can be realized in a communication system including the common switch and the communication system can concurrently accommodate scheduling terminals and business terminals. Therefore, the investment of scheduling communication devices can be reduced effectively and common call service between the business terminals is not influenced by the scheduling communication service.

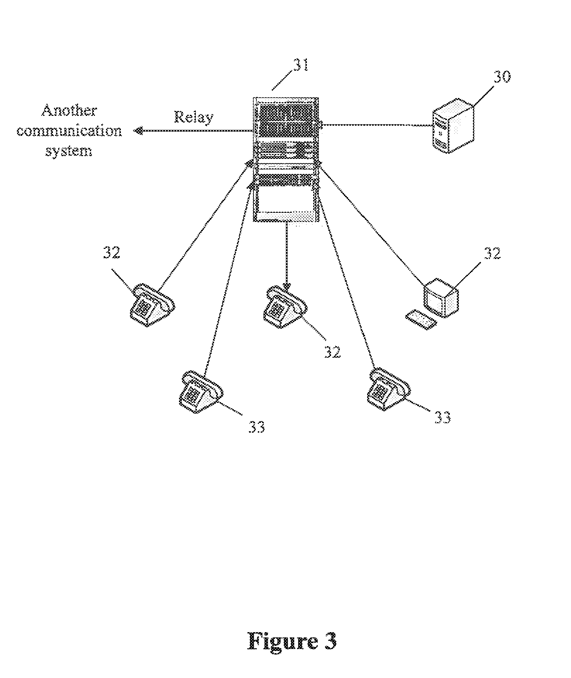

An embodiment of the present invention provides a communication system. As illustrated in Figure 3, the communication system includes: a switch 31, a scheduling application server 30, and scheduling terminals 32. The communication system may also include business terminals 33.

The switch 31 may be one capable of providing a routing rule for basic call service, i.e. a switch capable of routing call requests or response messages with a scheduling terminal as a caller or a callee to the scheduling application server 30. For example, it may be implemented by configuring special number segments, or configuring subscriber property, or editing script, and no development or configuration of the switch is involved in this case.

The scheduling application server 30, connected with the switch 31, is configured to receive messages forwarded by the switch 30, to obtain and store call parameter information on the scheduling terminals 32, and to perform scheduling operations (e.g. break-in, preemption, multicall, and broadcast) in accordance with the call parameter information, without the provision of common services such as incoming-call and outgoing-call authority control, call forwarding, and call register. The common services are accomplished by the switch 31.

The business terminals 33 are connected with the switch 31. A business terminal may be a common telephone set. Alternatively, the communication system may be provided with no such components.

The scheduling terminals 32 are connected with the switch 31 and the scheduling application server 30. A scheduling terminal may be a special terminal or a common telephone set. Generally, the special terminal is provided with some shortcut keys so that the subscriber can accomplish scheduling operations quickly or sends some special scheduling commands. In this case, the special terminal is the same as a scheduling terminal adopted in the existing scheduling communication system.

The switch and the scheduling application server in this embodiment may be arranged on different physical entities or arranged as two different logic entities on the same physical entity. If the switch and the scheduling application server are arranged on different physical entities, the subscriber's routine maintenance operation can be facilitated. If the switch and the scheduling application server are arranged on the same physical entity, the switch and the scheduling application server can be used in various manners and the coverage area of the communication system can be saved effectively.

The scheduling terminals and the business terminals according to the embodiment of the present invention may be allowed to home to the same switch. In this case, internal communication in the scheduling terminals and in the business terminals is performed without the need of a relay. However, communication between the communication system according to the embodiment of the present invention and any other system is performed via a relay, and communication between the scheduling communication system and any other network (e.g. Public Switched Telephone Network, PSTN) is performed via a relay.

The switch in this embodiment possibly can not identify the scheduling signaling such as break-in and preemption involved in the scheduling communication service. However, if the scheduling communication system adopts the Session Initiation Protocol (SIP) for communication, the scheduling communication system can send scheduling communication service requests such as break-in and preemption by extending the message INVITE (a message for requesting to establish a multimedia session in the SIP), and the switch can transparently transmit the request message in accordance with the SIP standard, so that the scheduling signaling can be transferred to the scheduling application server. If the scheduling communication system adopts any other protocol, the switch still needs to transparently transmit scheduling request messages such as break-in and preemption.

To enable the switch in an embodiment of the present invention to identify the scheduling signaling such as break-in and preemption involved in the scheduling communication service in the scheduling communication system, a signaling processing rule according to which the switch processes various requests and response messages is set as follows.

a. if both a caller and a callee in the scheduling communication system are business terminals, the switch may perform a processing in accordance with a normal procedure, i.e. directly sends a request to the callee, and directly returns a response to the caller, so as to establish a call connection between the caller and the callee, in this case the call connection is independent of the scheduling application server in the scheduling communication system.

b. if either of a caller and a callee is a scheduling terminal or both of which are scheduling terminals, the switch may perform a processing in the following two cases.

bi. if the switch receives a request or a response message from the scheduling application server, the switch performs a processing in accordance with a normal procedure, i.e. sends the request to the callee, and returns the response to the caller, so as to establish a call connection between the caller and the callee.

bii. if a request or a response message received by the switch is not from the scheduling application server, the switch sends the request or the response message to the scheduling application server for processing.

A scheduling communication system according to another embodiment of the present invention includes the same devices as those in the first embodiment except only that: the switch is a common switch configured to operate after being developed or configured a little so that the switch can exchange information between itself and the scheduling application server, i.e. route call requests or response messages with a scheduling terminal as a caller or a callee to the scheduling application server. The switch is connected with the scheduling application server, with the scheduling terminals in a wired or wireless manner, and with business terminals in a wired or wireless manner. The switch is provided with:

A caller/callee determination module, configured to determine whether a service is the one with a scheduling terminal as a caller or a callee in accordance with a message received;

A message source determination module, configured to determine whether the sender of the message is the scheduling application server if the caller/callee determination module determines that the service is the one with a scheduling terminal as a caller or a callee; and

A message forwarding module, configured to forward the message to the scheduling application server if the message source determination module determines that the sender of the message is not the scheduling application server, otherwise sends the message to the callee terminal.

As can be seen from this embodiment, the communication system in this embodiment of the present invention adopts the scheduling application server, which enables the switch in the system to route the call requests or the response messages with a scheduling terminal as a caller or a callee to the scheduling application server for processing, so that a communication system can concurrently accommodate scheduling terminals and business terminals by adding the scheduling application server in the case of using an existing switch or a switch with a little configuration, thereby reducing the investment of the scheduling terminal devices. Further, the common call service between the business terminals is not influenced by the scheduling communication service because of the use of the existing switch.

If the subscriber needs to operate common call service which involves a scheduling terminal in the embodiment of the present invention, the scheduling application server needs to process a common call request message, i.e. converts the call request message into a common response message, and forwards the common response message to the switch.

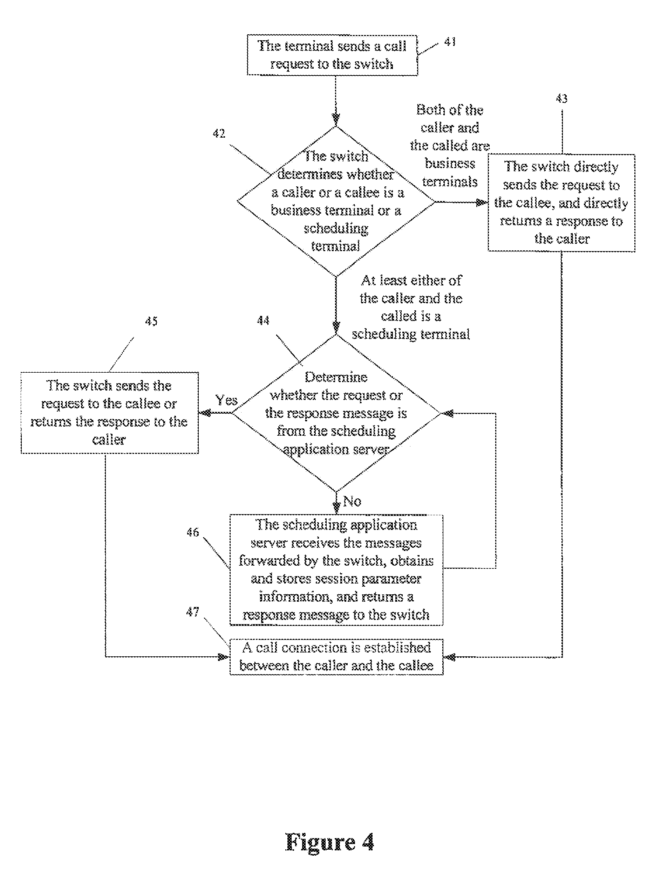

An embodiment of the present invention provides a common communication method which involves a scheduling terminal, as illustrated in Figure 4, includes the steps as follows.

In block 41, the terminal sends a call request to the switch.

In block 42, the switch determines whether a caller or a callee is a business terminal or a scheduling terminal, performs block 43 if the switch determines that both of the caller and the callee are business terminals, and performs block 44 if at least either of the caller and the callee is a scheduling terminal.

In block 43, the switch directly sends the request to the callee, and directly returns a response to the caller, so that a call connection is established between the caller and the callee, then the procedure goes to block 47.

In block 44, the switch determines whether the request or the response message is from the scheduling application server, and if yes, goes to block 45; otherwise goes to block 46.

In block 45, the switch sends the request to the callee or returns the response message to the caller, and then goes to block 47.

In block 46, the switch sends the request or the response message to the scheduling application server, which extracts and stores requisite call parameters for scheduling communication service from the request or the response message, converts the request message into one or more call requests or response messages that can be identified by a common switch, and returns the converted message(s) to the switch; then the procedure goes to block 44.

In block 47, a call connection is established between the caller and the callee.

In this case, the scheduling terminal and the business terminal (or the scheduling terminal and the scheduling terminal) are being in a call, and the scheduling application server stores detailed call parameters of the ongoing call.

If the subscriber needs to operate the scheduling service, it is necessary for the scheduling application server to process the scheduling service, convert a scheduling request message into one or more common request messages or common response messages that can be identified by the switch and forward to the switch. The common request message may be constructed in accordance with the call parameters of the terminal stored in the scheduling application server.

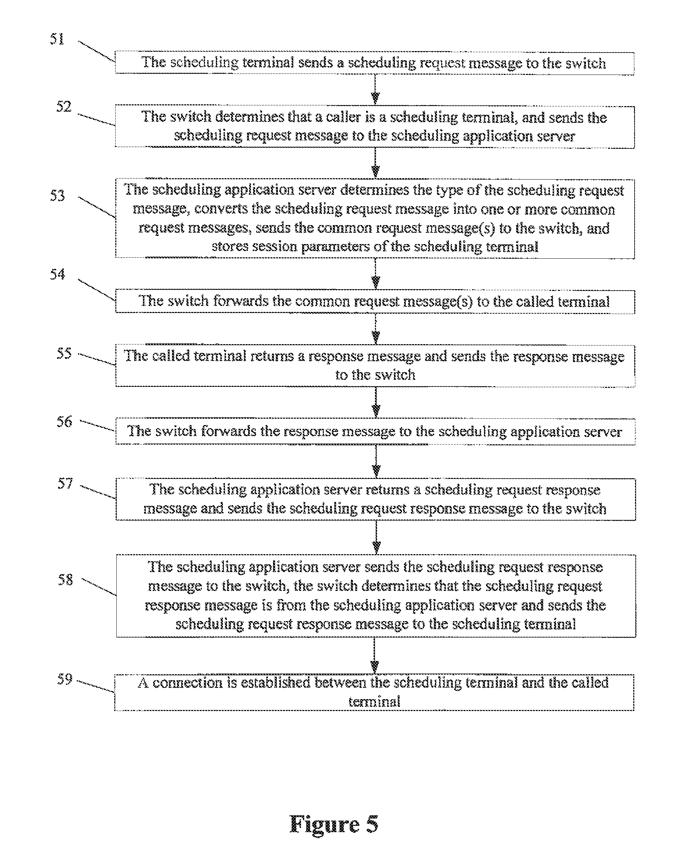

Figure 5 is a flowchart of a scheduling communication according to an embodiment of the present invention, which includes the steps as follows.

In block 51, the scheduling terminal sends a scheduling request message to the switch;

In block 52, the switch determines that a caller is a scheduling terminal, and sends the scheduling request message to the scheduling application server;

In block 53, the scheduling application server stores call parameters of the scheduling terminal, determines the type of the scheduling request message, converts the scheduling request message into one or more common request messages that can be identified by a common switch in accordance with the stored call parameters of the scheduling terminal, and sends the common request message(s) to the switch.

In block 54, the switch forwards the common request message(s) to the callee terminal.

In block 55, the callee terminal returns a response message and sends the response message to the switch.

In block 56, the switch determines the received response message is a message from the callee terminal, and sends the received response message to the scheduling application server.

In block 57, the scheduling application server returns a scheduling request response message and sends the scheduling request response message to the switch.

In block 58, the scheduling application server sends the scheduling request response message to the switch, the switch determines that the scheduling request response message is from the scheduling application server and sends the scheduling request response message to the scheduling terminal.

In block 59, a connection is established between the scheduling terminal and the callee terminal.

A communication method according to an embodiment of the present invention is described as follows by taking three typical service procedure as example.

A first typical service procedure: a common call procedure which involves a scheduling terminal.

In this procedure, the scheduling application server should involve in the common call which also involves the scheduling terminal, so that the scheduling application server registers call parameters of the scheduling terminal and provides the registered call parameters to subsequent services such as break-in and preemption. The call parameters can be used to convert a scheduling request message into multiple common request messages that can be identified by a switch.

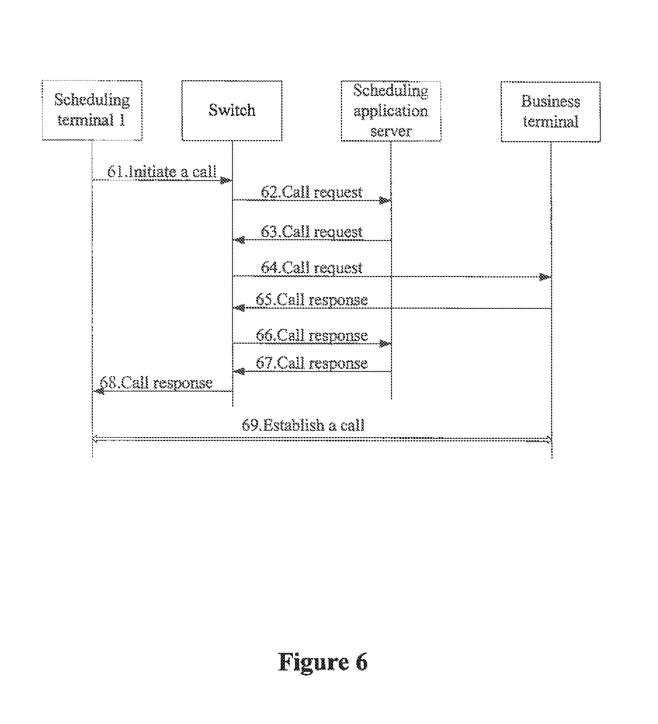

Figure 6 is a flowchart of a common call which involves a scheduling terminal according to an embodiment of the present invention,

In step 61, the scheduling terminal 1 sends a call request to the switch, for requesting to call a business terminal.

In step 62, the switch determines a caller (the scheduling terminal 1) is a scheduling terminal, and sends the call request to the scheduling application server for processing.

For a switch with a relative flexible routing rule, this determination can be implemented by configuring special number segments, or configuring subscriber property, or editing script.

In step 63, the scheduling application server registers call parameters of the scheduling terminal I into its own database, and sends the call request back to the switch.

In step 64, the switch directly sends a call request to a callee (the business terminal) on receiving the call request from the scheduling application server.

In step 65, the business terminal returns a response message to the switch on receiving the call request.

In step 66, the switch sends the response message to the scheduling application server for processing if the switch determines that the caller is a scheduling terminal.

In step 67, the scheduling application server registers call parameters of the scheduling terminal 1 into its own database, and then sends a call response to the switch.

In step 68, the switch directly returns the response message to the caller (the scheduling terminal 1) on receiving the response message from the scheduling application server.

In step 69, a call connection is established between the scheduling terminal 1 and the business terminal.

A second typical service procedure: a break-in service procedure.

This procedure is implemented on the basis of the first typical service procedure, in which case, the scheduling application server stores the call parameters of the scheduling terminal and provides the call parameters for subsequent break-in service.

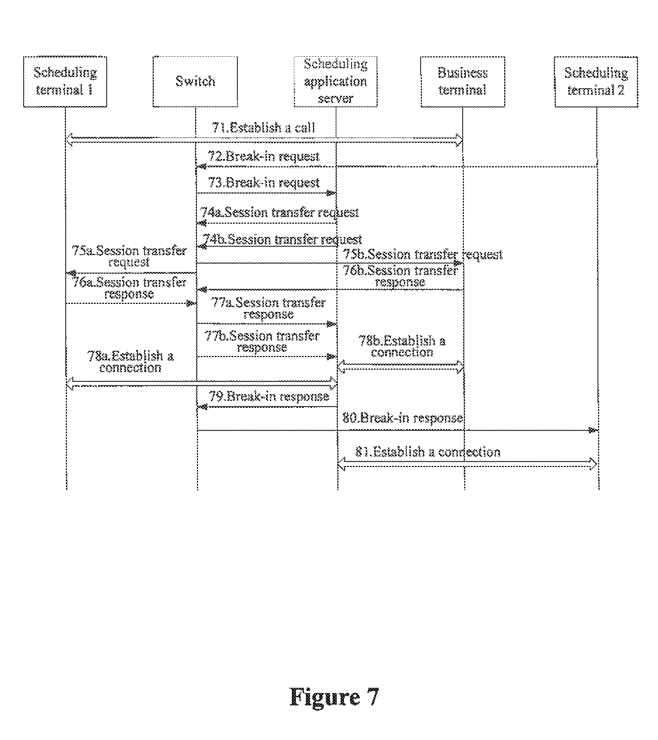

Figure 7 is a flowchart of a break-in service according to an embodiment of the present invention. For the processing of break-in signaling, the switch is only responsible for forwarding request and response messages. This procedure includes the steps as follows.

In step 71, a connection is established between the scheduling terminal and the business terminal, and the scheduling terminal and the business terminal are in a call, in the common call procedure which involves the scheduling terminal (the first service procedure). In this case, the scheduling application server stores the call parameters of the scheduling terminal and the business terminal.

In step 72, the scheduling terminal 2 sends a break-in call request to the switch, for requesting to break in the scheduling terminal 1.

In step 73, the switch determines a caller (the scheduling terminal 2) is a scheduling terminal, and sends therefore the break-in call request to the scheduling application server for processing.

The scheduling application server can convert the break-in request message into multiple common request messages and at least one response message that can be identified by a common switch. The common request message can be constructed in accordance with the call parameters of the scheduling terminal pre-stored by the scheduling application server.

The scheduling application server determines that the callee (the scheduling terminal 1) of the break-in call is being in a call with the business terminal, therefore, the session between the scheduling terminal 1 and the business terminal needs to be transferred to the scheduling application server.

Steps 74a to 78a describe that the session of the scheduling terminal 1 is transferred to the scheduling application server.

74a. the scheduling application server sends a session transfer request to the switch, for requesting to transfer the ongoing session between the scheduling terminal 1 and the business terminal to the scheduling application server.

75a. the switch determines the request is from the scheduling application server, and sends the session transfer request to the scheduling terminal 1.

76a. the scheduling terminal 1 receives the session transfer request, and sends a response message to the switch.

77a. the switch determines that the caller of the original session corresponding to the response message is a scheduling terminal, and sends the response message to the scheduling application server for processing.

78a. the scheduling application server establishes a connection between the scheduling terminal 1 and the scheduling application server on receiving the session transfer response message.

The process of steps 74b to 78b describes that the session of the business terminal is transferred to the scheduling application server, which is similar to steps 74a to 78a and is not described here. The process of steps 74a to 78a is performed synchronously with that of steps 74b to 78b.

After both sessions of the scheduling terminal 1 and the business terminal are transferred to the scheduling application server, the scheduling application server responds to the scheduling terminal 2, and the scheduling terminal 2 connects to the scheduling application server, thereby implementing the break-in function of the scheduling communication system as steps 79 to 81.

79. the scheduling application server sends a break-in response message to the switch, for responding to the break-in request from the scheduling terminal 2.

80. the switch determines that the response message is from the scheduling application server, and directly sends the response to the caller (the scheduling terminal 2).

81. a connection is established between the scheduling terminal 2 and the scheduling communication server.

Ultimately, connections are established between the scheduling server and the scheduling terminal 1 as well as between the business terminal and the scheduling terminal 2. The scheduling application server mixes the speech, thereby implementing a three-party conference, in which the scheduling terminal 2 is broken in the scheduling terminal 1 successfully.

A third typical service procedure: a multicall service procedure.

The multicall procedure of the present invention is implemented as follows: the scheduling application server converts a received scheduling request message into one or more common call request messages or response messages that can be identified by a common switch and forwards to the switch, so that a caller/callees in the multicall service can be connected with the scheduling application server, thereby one caller can call multiple callees simultaneously.

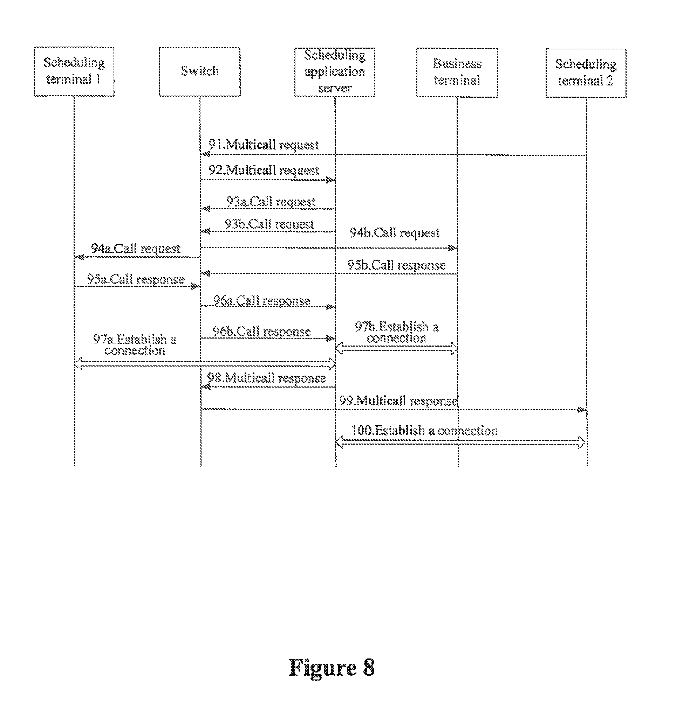

Figure 8 is a flowchart of a multicall service according to an embodiment of the present invention. This procedure includes the steps as follows.

In step 91, the scheduling terminal 2 sends a multicall call request to the switch, for requesting to simultaneously call the scheduling terminal 1 and the business terminal.

In step 92, the switch determines a caller (the scheduling terminal 2) is a scheduling terminal, and sends the multicall call request to the scheduling application server for processing.

In accordance with session parameters of the scheduling terminal stored in the scheduling application server, the scheduling application server converts the multicall call request message into multiple common request messages and at least one response message that can be identified by a switch and forwards to the switch, so that a connection is established between callees of the multicall and the scheduling application server, with steps 93a to 97a as follows.

93a. the scheduling application server sends a call request to the switch.

94a, the switch determines that the request is from the scheduling application server, and sends the call request to the scheduling terminal 1.

95a. the scheduling terminal 1 receives the call request, and sends a response message to the switch.

96a. the switch determines that a caller corresponding to the response message is a scheduling terminal, and sends the response message to the scheduling application server for processing.

97a. the scheduling application server receives the response message for the call request, and establishes a connection between the scheduling terminal 1 and the scheduling application server.

The process of steps 93b to 97b describes that a business terminal is connected with the scheduling application server, which is similar to steps 93a to 97a and is not described here. The process of steps 93a to 97a is performed synchronously with that of steps 93b to 97b.

After the connections between the scheduling terminal 1 and the scheduling application server as well as between the business terminal and the scheduling application server are established, the scheduling application server responds to the scheduling terminal 2, and the scheduling terminal 2 connects to the scheduling application server, thereby implementing the multicall function of the scheduling communication system with steps 98 to 100.

98. the scheduling application server sends a multicall response message to the switch, for responding the multicall request from the scheduling terminal 2.

99. the switch determines that the response message is from the scheduling application server, directly sends a response to the caller (the scheduling terminal 2).

100. a connection is established between the scheduling terminal 2 and the scheduling communication server.

It can be seen from the above embodiments that, an existing switch or a developed switch and a scheduling application server are utilized in a communication system; the scheduling application server performs scheduling service operations, so that the communication system can implement scheduling communication services. The communication system and method can support scheduling terminals and business terminals, thereby implementing calls from the scheduling terminals to the business terminals, and implementing via the scheduling application server scheduling communication services such as break-in, preemption, multicall and broadcast, i.e. implementing not only common call services but also scheduling communication services; also, because the subscriber can implement scheduling communication services by newly adding the scheduling application server in the system with the existing common switch, the investment of scheduling devices can be reduced; further, in the communication system and the communication method, a determination is performed on a terminal corresponding to a call request message, and a common session is established if both of a caller and a callee are business terminals, therefore, common communication services are not influenced by the scheduling service.

The above are preferred embodiments of the present invention. However, the protective scope of the embodiments of the present invention is not limited to these embodiments. Any variations and substitutes that can be made by those skilled in the art within the disclosure of the embodiments of the present invention shall fall into the scope defined by the claims.

## Claims

1. A communication method for implementing a scheduling communication service, comprising:
receiving by a switch a request message or a response message with a scheduling terminal as a caller or a callee;
sending or returning the request message or the response message from the switch to the callee or the caller, if the sender of the request message or the response message is a scheduling application server; and
if the sender of the request message or the response message is not a scheduling application server, forwarding by the switch the request message or the response message to the scheduling application server, and receiving a message that is obtained by converting the request message or the response message by the scheduling application server and can be identified by the switch.

2. The communication method according to claim 1, further comprising:
determining by the scheduling application server the type of the request message forwarded by the switch;
converting the request message into the message that can be identified by the switch in accordance with call parameters of the terminal stored by the scheduling application server; and
sending the converted message that can be identified by the switch to the switch.

3. The communication method according to claim 2, wherein the scheduling application server converts the request message into at least one common call request message that can be identified by the switch.

4. The communication method according to claim 2, wherein the type of the request message comprises one or more of break-in, preemption, multicall, and broadcast.

5. The communication method according to claim 1, further comprising:
storing by the scheduling application server call parameters of the terminal in accordance with the received request message or the response message forwarded by the switch.

6. The communication method according to claim 5, wherein the call parameters of the terminal comprise: caller/callee number, call identifier, and code type.

7. A switch, comprising:
a caller/callee determination module, configured to determine whether a service is one with a scheduling terminal as a caller or a callee in accordance with a message received;
a message source determination module, configured to determine whether the sender of the message is a scheduling application server if the caller/callee determination module determines that the service is one with a scheduling terminal as a caller or a callee; and
a message forwarding module, configured to forward the message to the scheduling application server if the message source determination module determines that the sender of the message is not the scheduling application server, otherwise sends the message to the callee.

8. A communication system comprising a switch, wherein the system further comprises a scheduling application server,
the switch is configured to forward a request message or a response message with a scheduling terminal as a caller or a callee;
the scheduling application server is configured to receive the message forwarded by the switch, to obtain call parameter information on a scheduling terminal, to convert the request, or the response message forwarded by the switch into a common call request or a response message that can be identified by the switch in accordance with the call parameter information, and to forward the common call request or response message that can be identified by the switch to the switch.

9. The communication system according to claim 8, wherein the scheduling application server comprises:
a switch interface module, configured to implement a communication between the scheduling application server and the switch;
a scheduling subscriber call parameter maintenance module, configured to obtain a message sent by the switch from the switch interface module and to store the call parameter information on the scheduling terminal; and
a scheduling service logic module, configured to perform scheduling operations in accordance with the call parameter information on the scheduling terminal.

10. A scheduling application server, comprising:
a switch interface module, configured to implement a communication between a scheduling application server and a switch;
a scheduling subscriber call parameter maintenance module, configured to obtain a message sent by the switch from the switch interface module and to store call parameter information on a scheduling terminal; and
a scheduling service logic module, configured to perform scheduling operations in accordance with the call parameter information on the scheduling terminal.
